# EUROPEAN PATENT APPLICATION

(11) **EP 1 925 951 A1**
(43) Date of publication of application: **28.05.2008**
(21) Application number: 06782482.1
(22) Date of filing: 08.08.2006
(51) Int. Cl.: G02B 3/00, C03C 3/17, C03C 3/19, C03C 3/21, C03C 21/00, G02B 1/00, G02B 5/22, C03C 3/087, C03C 3/089, C03C 3/247

(54) **METHOD FOR MANUFACTURING GRADIENT-INDEX OPTICAL ELEMENT HAVING INFRARED ABSORBING ABILITY**

(30) Priority: 08.08.2005 JP 2005229846
(71) Applicant: ISUZU GLASS CO., LTD., Osaka-shi, Osaka 557-0063 (JP); National Institute of Advanced Industrial Science and Technology, Tokyo 100-8921 (JP)
(72) Inventor: SUETSUGU, Tatsuya, Osaka-shi, Osaka 557-0063 (JP); KIMURA, Kazuhisa, Osaka-shi, Osaka 557-0063 (JP); OHTANI, Takeshi, Osaka-shi, Osaka 557-0063 (JP); KAGA, Naoko, Osaka-shi, Osaka 557-0063 (JP); KIKUCHI, Naoki, Osaka-shi, Osaka 557-0063 (JP); YAMASHITA, Naoto, Osaka-shi, Osaka 557-0063 (JP); MORIZANE, Yukiko, Osaka-shi, Osaka 557-0063 (JP); EINISHI, Toshihiko, Osaka-shi, Osaka 557-0063 (JP); KADONO, Kohei, Ikeda-shi, Osaka 563-8577 (JP)
(74) Representative: Manley, Nicholas Michael
(86) International application number: PCT/JP2006/315656
(87) International publication number: WO 2007/018208

(57) **Abstract**

A method of readily producing a gradient optical element having infrared absorbing ability by easily forming a refractive index distribution in a desired portion of a glass substrate having infrared absorbing ability without requiring a specific treatment atmosphere nor using a molten salt.

More specifically, the present invention provides a method for producing a gradient-index optical element having infrared absorbing ability, the method comprising applying a paste containing an organic resin, an organic solvent, and at least one compound selected from the group consisting of lithium compounds, potassium compounds, rubidium compounds, cesium compounds, silver compounds, copper compounds, and thallium compounds onto a glass substrate containing an alkali metal component, at least one member selected from the group consisting of iron, copper, cobalt and vanadium, and over 3 wt.% of iron, when contained singly among iron, copper, cobalt and vanadium, on an Fe₂O₃ basis, taking the total weight of the glass as 100 wt.%, and heating the glass substrate at a temperature below the softening temperature of the glass substrate.

## Description

### TECHNICAL FIELD

The present invention relates to a method for manufacturing a gradient-index optical element having infrared absorbing ability.

### BACKGROUND ART

The spectral sensitivity of image pickup devices used in photo cameras, VTR cameras, etc., is wide, from the visible light range to the infrared range. For this reason, infrared-cut filters that correct spectral sensitivity to the proximity of human visibility by absorbing the light in the infrared range from 800 to 1,000 nm and permeating the light in the visible light range from 400 to 650 nm are considered to be essential optical components.

Lately, optical instruments have been downsized, and there is high demand for smaller versions of the cameras described above. However, in these cameras, the camera lens and the infrared-cut filter are installed separately, limiting the ability to downsize lens peripheral areas. To solve this problem, attempts have been made to manufacture a camera lens by forming a refractive index distribution on a glass substrate that has infrared absorbing ability, to impart infrared absorbing ability to the lens (a graded refractive index lens) itself.

Known methods for manufacturing a graded refractive index lens include, for example, ion exchange methods, double crucible methods, CVD methods (vapor-phase deposition methods), sol-gel methods, rod-in-tube methods, etc. Among these, ion exchange is the most typical method for forming a refractive index distribution, and comprises immersing a glass substrate into a molten salt containing monovalent ions (e.g., K⁺, Tl⁺, Ag⁺) to exchange monovalent ions in the glass (e.g., Na⁺) for the monovalent ions in the molten salt. For example, Patent Document 1 discloses a method for producing a graded refractive index lens comprising subjecting a Na-containing glass substrate to ion exchange using a molten salt containing Ag⁺.

When a gradient-index optical element (for example, the lens described earlier) is produced by an ion exchange method, the temperature of the molten salt used is in the range of about 250 to 400°C, and manufacturing facility costs less than that for vapor-phase methods such as CVD. Moreover, compared to manufacturing spherical lenses, ion exchange methods are advantageous in term of ease of polishing. However, common ion exchange methods have the following problems.

The first problem is the control of conditions of the molten salt at the time of ion exchange. The ion exchange rate and the rate of ion diffusion in a glass substrate depend on the temperature of the molten salt. The liquid phase temperature of the molten salt depends on the mixing ratio (composition) of the molten salt, and the ion exchange temperature can be controlled only at temperatures not lower than the liquid phase temperature of the molten salt. For this reason, there are cases in which the concentration of ions in the molten salt and the ion exchange temperature cannot be controlled independently. Therefore, to produce a graded refractive index lens having a desired refractive index distribution by an ion exchange method, it is not easy to select the appropriate ion exchange conditions such as the molten salt composition, temperature, immersion time, etc., and a high level of expertise is needed. Furthermore, when using ions that are prone to oxidation in air, it should be noted that ion exchange needs to be performed in a reducing atmosphere.

The second problem is the application of an ion exchange-blocking film. When ion exchange is performed using a molten salt, it is necessary to apply an ion exchange-blocking film over the entire substrate, except the portion where a refractive index distribution is to be formed. Photolithography technique is generally used to apply an ion exchange-blocking film, but formation of such a blocking film requires a complicated process.
Patent Document 1: Unexamined Japanese Patent Publication No. 2001-159702

### DISCLOSURE OF THE INVENTION

### PROBLEMS TO BE SOLVED BY THE INVENTION

A primary object of the present invention is to provide a method of readily producing a gradient-index optical element having infrared absorbing ability by easily forming a refractive index distribution in a desired portion of a glass substrate having infrared absorbing ability without using a molten salt or requiring a specific treatment atmosphere.

### MEANS FOR SOLVING THE PROBLEM

The present inventors conducted extensive studies to achieve the above object, and found that the above object can be achieved according to a production method comprising diffusing Li⁺ ions, K⁺ ions, Rb⁺ ions, Cs⁺ ions, Ag⁺ ions, Cu⁺ ions, Tl⁺ ions, etc., into a glass substrate containing an alkali metal component, at least one member selected from the group consisting of iron, copper, cobalt and vanadium, and over 3 wt.% of iron, when contained singly among iron, copper, cobalt and vanadium, on an Fe₂O₃ basis, taking the total weight of the glass as 100 wt.%, using a specific paste containing an organic resin, an organic solvent, and at least one compound selected from the group consisting of lithium compounds, potassium compounds, rubidium compounds, cesium compounds, silver compounds, copper compounds, and thallium compounds, to form a region having a different refractive index (hereinafter also referred to as a "different refractive index region") in the glass substrate, whereby the present invention was accomplished.

More specifically, the present invention relates to methods for producing a gradient-index optical element having infrared absorbing ability described below.
Item 1. A method for producing an gradient-index optical element having infrared absorbing ability, the method comprising applying a paste containing an organic resin, an organic solvent, and at least one compound selected from the group consisting of lithium compounds, potassium compounds, rubidium compounds, cesium compounds, silver compounds, copper compounds, and thallium compounds onto a glass substrate containing an alkali metal component, at least one member selected from the group consisting of iron, copper, cobalt and vanadium, and over 3 wt.% of iron, when contained singly among iron, copper, cobalt and vanadium, on an Fe₂O₃ basis, taking the total weight of the glass as 100 wt.%, and heating the glass substrate at a temperature below the softening temperature of the glass substrate.
Item 2. The production method of Item 1, wherein the glass substrate has an infrared transmittance of 80% or lower at a thickness of 1 mm.
Item 3. The production method of Item 1, wherein the glass substrate is made of glass containing at least 2 wt.% of an alkali metal component on an oxide basis, the glass being a silicate glass, borosilicate glass, phosphate glass, or fluorophosphate glass.
Item 4. The production method of Item 1, wherein the glass substrate is made of a phosphate glass containing each component below as an oxide composition, taking the total glass weight as 100 wt.%,
(1) 51 to 60 wt.% of P₂O₅,
(2) 17 to 33 wt.% of ZnO,
(3) 1 to 6 wt.% of Al₂O₃,
(4) 0 to 5 wt.% of Li₂O, 0 to 10 wt.% of Na₂O and 0 to 15 wt.% of K₂O, with the total weight of Li₂O, Na₂O and K₂O being 5 to 17 wt.%,
(5) 0 to 7 wt.% of MgO, and 0 to 7 wt.% of CaO, with the total weight of MgO and CaO being 1 to 12 wt.%,
(6) 0 to 5 wt. % of B₂O₃,
(7) 0 to 10 wt.% of at least one member selected from the group consisting of Y₂O₃, La₂O₃, Ta₂O₅ and WO₃, and
(8) 0.2 to 8 wt.% of CuO.
Item 5. The production method of Item 1, wherein the glass substrate is made of a phosphate glass containing each component below as an oxide composition, taking the total glass weight as 100 wt.%,
(1) 60 to 80 wt.% of P₂O₅,
(2) 5 to 12 wt.% of ZnO,
(3) 5 to 10 wt. % of Al₂O₃,
(4) 0 to 5 wt. % of Li₂O, 0 to 8 wt. % of Na₂0, 7 to 15 wt.% of K₂0 and 0 to 8 wt. % of Cs₂O, with the total weight of Li₂0, Na₂0, K₂0 and Cs₂O being 7 to 15 wt.%,
(5) 0 to 10 wt.% of MgO and 0 to 10 wt.% of CaO, with the total weight of MgO and CaO being 3 to 10 wt.%,
(6) 0 to 1.5 wt.% of B₂O₃ and 0 to 1.5 wt.% of SiO₂, with the total weight of B₂O₃ and SiO₂ being 0.5 to 2 wt.%, and
(7) 0.2 to 10 wt.% of CuO.
Item 6. The production method of Item 1, wherein the glass substrate further contains 0 to 5 wt.% of at least one member selected from the group consisting of BaO, SrO, Y₂O₃, La₂O₃, ZrO₂, Ta₂O₅, Nb₂O₅, TiO₂ and Gd₂O₃.
Item 7. A gradient-index optical element having infrared absorbing ability produced by the production method of Item 1.
Item 8. The gradient-index optical element of Item 7, wherein the element is a lens or lens array.
Item 9. The gradient-index optical element of Item 7, wherein the element is a camera lens or camera lens array.

The method for producing a gradient-index optical element having infrared absorbing ability of the present invention is described below in detail. The optical element of the present invention refers to the element that exhibits desired optical properties by utilizing a different refractive index region formed in at least a portion of a glass substrate. Specific examples of such optical elements include graded refractive index lenses, graded refractive index lens arrays, diffraction gratings, and the like. Among the above lens and lens array, lenses and lens arrays for cameras are examples of optical elements to which infrared absorbing ability is readily applied.

In the method of the invention, it is essential to use a glass substrate containing an alkali metal component, at least one member selected from the group consisting of iron, copper, cobalt and vanadium, and over 3 wt.% of iron, when contained singly among iron, copper, cobalt and vanadium, on an Fe₂O₃ basis, taking the total weight of the glass as 100 wt.%.

Examples of the alkali metal component contained in the glass substrate include Li, Na, K, Rb, Cs, etc. Among these, Li, Na, K are preferable, and Na is particularly preferable. These alkali metal components may exist in an ionic state, or may exist as an oxide. Such alkali metal components may be present singly, or two or more may be present concurrently.

The alkali metal component content in the glass substrate is suitably at least about 2 wt.%, preferably at least about 5 wt.%, and more preferably at least about 10 wt.%, calculated on an oxide basis. Although the maximum alkali metal component content is not limited, it is suitably about 40 wt.%, preferably about 30 wt.%, and more preferably about 20 wt.%, calculated on an oxide basis.

The glass substrate contains at least one member selected from the group consisting of iron, copper, cobalt and vanadium. The glass substrate has infrared absorbing ability owing to these components (hereinafter also referred to as "infrared absorbing components") contained therein. However, when iron is singly contained among the above infrared absorbing components, the iron content should be selected to an amount exceeding 3 wt.% on an Fe₂O₃ basis, taking the total glass weight as 100 wt.%. More specifically, iron is preferably contained in an amount of 3.1 wt.% or greater, and more preferably 3.2 wt.% or greater, with the upper limit being about 15 wt.% on an Fe₂O₃ basis.

Whereas when two or more components among the above infrared absorbing components are contained, the amount of these components is not limited. However, to achieve the desired effects sufficiently, it is desirable that the lower limit be about 0.2 wt.% in the total of two or more components from iron on an Fe₂O₃ basis, copper on a CuO basis, cobalt on a CoO basis, and vanadium on a VO₂ basis.

The degree of infrared absorbing ability of the glass substrate can be selected according to a specific application of the final product, i.e., a gradient-index optical element; however, to maximize the infrared absorbing ability, infrared transmittance is preferably 80% or lower, and more preferably 60% or lower, at a thickness of 1 mm. In the present specification, the infrared transmittance refers to the transmittance obtained when infrared radiation is irradiated on a 1-mm glass substrate or an optical element using such a substrate in a vertical direction from the glass substrate.

In the present invention, the type of glass that composes the glass substrate is not limited insofar as it meets the above-mentioned conditions of glass components. Examples include silicate glass, borosilicate glass, phosphate glass, fluorophosphate glass, etc.

The specific composition of these glasses is not limited, and any glasses which satisfy the above component conditions and have known compositions of silicate glass, borosilicate glass, phosphate glass, fluorophosphate glass, etc., can be used.

Preferable examples include phosphate glasses having the compositions shown in Composition Examples A (phosphate glass) and B (phosphate glass), and silicate glass having the composition shown below in Composition Example C, etc.

### Composition Example A (Phosphate Glass)

Phosphate glass containing each component below as an oxide composition, taking the total glass weight as 100 wt.%,
(1) 51 to 60 wt.% of P₂O₅,
(2) 17 to 33 wt.% of ZnO,
(3) 1 to 6 wt.% of Al₂O₃,
(4) 0 to 5 wt.% of Li₂O, 0 to 10 wt.% of Na₂O and 0 to 15 wt.% of K₂O, with the total weight of Li₂O, Na₂O and K₂O being 5 to 17 wt.%,
(5) 0 to 7 wt.% of MgO, and 0 to 7 wt.% of CaO, with the total weight of MgO and CaO being 1 to 12 wt.%,
(6) 0 to 5 wt.% of B₂O₃,
(7) 0 to 10 wt.% of at least one member selected from the group consisting of Y₂O₃, La₂O₃, Ta₂O₅ and WO₃, and
(8) 0.2 to 8 wt.% of CuO.

### Composition Example B (Phosphate Glass)

Phosphate glass containing each component below as an oxide composition, taking the total glass weight as 100 wt.%,
(1) 60 to 80 wt.% of P₂O₅,
(2) 5 to 12 wt.% of ZnO,
(3) 5 to 10 wt.% of Al₂O₃,
(4) 0 to 5 wt. % of Li₂O, 0 to 8 wt.% of Na₂O, 7 to 15 wt.% of K₂O and 0 to 8 wt.% of Cs₂O, with the total weight of Li₂O, Na₂O, K₂O and Cs₂O being 7 to 15 wt.%,
(5) 0 to 10 wt.% of MgO and 0 to 10 wt.% of CaO, with the total weight of MgO and CaO being 3 to 10 wt.%,
(6) 0 to 1.5 wt.% of B₂O₃ and 0 to 1.5 wt.% of SiO₂, with the total amount of B₂O₃ and SiO₂ being 0.5 to 2 wt.%, and
(7) 0.2 to 10 wt.% of CuO.

### Composition Example C (Silicate Glass)

Silicate glass containing each component below as an oxide composition, taking the total glass weight as 100 wt.%,
(1) 40 to 80 wt.%, preferably 50 to 75 wt.%, of SiO₂,
(2) 5 to 25 wt.%, preferably 7 to 20 wt.% of CaO,
(3) 5 to 25 wt.%, preferably 7 to 20 wt.%, of at least one member selected from the group consisting of Na₂O, K₂O, Li₂O, Rb₂O and CS₂O,
(4) 2.5 wt.% or less, preferably 2.4 wt.% or less, of at least one member selected from the group consisting of MgO, BaO, ZnO, SrO and PbO,
(5) 15 wt.% or less, preferably 10 wt.% or less of Al₂O₃, and
(6) 3.1 wt.% or more, preferably 3.2 wt.% or more, of Fe₂O₃.

In the above Composition Examples A and B, it is particularly preferable that CuO be contained in an amount of 1 to 5 wt.%. The copper component in CuO is present as substantially divalent copper in the glass mesh structure made of P₂O₅, giving the glass a blue-green color and thereby exhibiting infrared absorbing ability. The copper component can be present in a monovalent copper state; however, when monovalent copper is contained in a large amount, the transmittance near 400 nm is deteriorated. For this reason, it is preferred that monovalent copper not be contained.

In the above Composition Example C, Fe₂O₃ is preferably contained in an amount of 3.2 wt.% or more with the upper limit being about 15 wt.%. More specifically, in the case of Composition Example C, it is preferable that Fe₂O₃ be contained within the range of 3.1 to 15 wt.%.

To further improve properties of the glass substrate, various oxides may further be added. Examples of oxides added for improving the chemical durability of a glass and melting properties of raw glass materials include BaO, SrO, Y₂O₃, La₂O₃, ZrO₂, Ta₂O₅, Nb₂O₅, TiO₂, Gd₂O₃, etc. These additives can be used singly, or two or more can be used in combination.

The amount of the additive to be contained is not limited, and can be suitably determined in accordance with the extent to which the properties are to be improved, kinds of additives, and the like. In particular, to improve glass chemical durability and melting properties of raw glass materials, it is desirable that 0 to 5 wt.%, and particularly 0.5 to 2 wt.%, taking the total glass weight as 100 wt. %, of at least one member selected from the group consisting of BaO, SrO, Y₂O₃, La₂O₃, ZrO₂, Ta₂O₅, Nb₂O₅, TiO₂ and Gd₂O₃, as an oxide composition, be further added.

The form of such a glass substrate is not limited, and can be suitably determined according to the purpose of the final product. For example, a wide variety of forms suitable for lenses, lens arrays, and diffraction gratings can be used, and specific examples thereof are plates, cylindrical columns, rectangular columns, and the like. For example, substrates formed into a desired shape by grinding a mass of glass having a composition as described above, and substrates formed by molding a molten glass into a desired shape and then optionally polishing may be used.

The method of the present invention comprises applying a paste containing at least one compound selected from the group consisting of lithium compounds, potassium compounds, rubidium compounds, cesium compounds, silver compounds, copper compounds, and thallium compounds (hereinafter collectively referred also to "metal compound") to such a glass substrate, and performing heat treatment at a temperature below the softening temperature of the glass substrate.

The paste for use is one obtained by dispersing an organic resin and at least one compound selected from the group consisting of lithium compounds, potassium compounds, rubidium compounds, cesium compounds, silver compounds, copper compounds, and thallium compounds in an organic solvent and forming a paste. Any such paste can be used as long as the paste has a viscosity that allows its application to a glass substrate and it contains the above metal compounds capable of diffusing at least one selected from the group consisting of lithium ion, potassium ion, rubidium ion, cesium ion, silver ion, copper ion and thallium ion by heat treatment. More specifically, the paste viscosity can be suitably selected in consideration of the application method, paste composition, diffusion conditions into the substrate, etc. For example, when the paste is applied by the ink-jet method to be described later, it is desirable to use a paste that has a viscosity of about 1 to about 15 cP at an application temperature.

Such a paste is applied to the glass substrate and heat-treated, whereby the metal ions in the metal compounds contained in the paste are diffused into the glass substrate as Li⁺ ions, K⁺ ions, Rb⁺ ions, Cs⁺ ions, Ag⁺ ions, Cu⁺ ions, Tl⁺ ions, etc., by ion exchange with an alkali metal component of the glass substrate. The portion containing such diffused metal ions has a different refractive index region, and the refractive index has a continuous distribution that varies according to the concentration of diffused ions. In particular, Ag⁺ ions, Tl⁺ ions, etc., are preferably diffused, because a desired refractive index distribution is easily achieved due to the wide adjustable range of the refractive index. The metal compound contained in the paste is not limited insofar as it is an ionic metal compound capable of diffusing metal ions into a glass substrate by heat treatment, but inorganic salts are preferably used. Specific examples of metal compounds are given below.

Examples of lithium compounds include LiNO₃, LiCl, LiBr, LiI, LiF, Li₂SO₄, etc. LiNO₃, Li₂SO₄, etc., are particularly preferable among these.

Examples of potassium compounds include KNO₃, KCl, KBr, KI, KF, K₂SO₄, etc. KNO₃, K₂SO₄, etc., are particularly preferable among these.

Examples of rubidium compounds include RbNO₃, RbCl, RbBr, RbI, RbF, Rb₂SO₄, etc. RbNO₃, Rb₂SO₄, etc., are particularly preferable among these.

Examples of cesium compounds include CsNO₃, CsCl, CsBr, CsI, CsF, Cs₂SO₄, etc. CsNO₃, Cs₂SO₄, etc., are particularly preferable among these.

Examples of silver compounds include AgNO₃, AgCl, AgBr, AgI, AgF, Ag₂S, Ag₂SO₄, Ag₂O, etc. AgNO₃ is particularly preferable among these.

Examples of copper compounds include CuSO₄, CuCl, CuCl₂, CuBr, Cu8r2, Cu₂O, CuO, Cu(NO₃)₂, CuS, CuI, CuI₂, Cu(NO₃) · 3H₂O, etc. CuSO₄, Cu(NO₃)₂, etc., are particularly preferable among these. These copper compounds may be used singly, or two or more may be mixed for use.

Examples of thallium compounds include TlNO₃, TlCl, TlBr, TlI, TlF, Tl₂S, Tl₂SO₄, Tl₂O, etc. TINO₃ is particularly preferable among these.

These metal compounds may be used singly, or two or more may be mixed for use.

The organic resin to be contained in the paste is one that decomposes at the heat treatment temperature, and preferably one easily removable by washing with water. Examples of resins having such properties include cellulose resins, methyl cellulose resins, cellulose acetate resins, cellulose nitrate resins, cellulose acetate butyrate resins, acrylic resins, petroleum resins, etc. Such organic resins can be used singly, or two or more may be mixed for use.

The organic solvent used in the paste is preferably a solvent in which a metal compound and an organic resin can be easily dispersed and which easily volatilizes when dried. More specifically, a solvent that is a liquid at room temperature (about 20C°) and volatilizes at a temperature of about 50C° to about 200C° is preferable. Examples of such solvents include alcohols such as methanol, ethanol, terpineol, etc.; dimethyl ether; ketones such as acetone, etc.; and so on.

If necessary, additives may be incorporated into the paste. For example, Na₂SO₄, NaNO₃, NaCl, NaBr, NaI, etc., are given as additives to lower the melting point of the metal compound. Among these, at least one of Na₂SO₄, NaNO₃ is preferable. The content of such additives is not limited, but may be 200 parts by weight or less, and preferably 180 parts by weight or less, per 100 parts by weight of the metal compound.

The content of each component in the paste can be suitably selected in accordance with the properties of a final product. For example, when the metal compound is potassium compound, rubidium compound or cesium compound, the weight of organic solvent is 2 to 25 parts by weight, and preferably 5 to 20 parts by weight, the weight of resin component is 15 to 45 parts by weight, and preferably 20 to 40 parts by weight, and the weight of additive is 3 parts by weight or less, per 100 parts by weight of the metal compound. In particular, such a composition is desirable when KNO₃ is used as potassium compound, and RbNO₃ is used as rubidium compound, and CsNO₃ is used as cesium compound.

Alternatively, when the metal compound is silver compound or thallium compound, the weight of organic solvent is 15 to 45 parts by weight, and preferably 20 to 40 parts by weight, the weight of resin component is 50 to 170 parts by weight, and preferably 70 to 150 parts by weight, and the weight of additive is 180 parts by weight or less, and preferably 160 parts by weight or less, per 100 parts by weight of the metal compound. In particular, when AgNO₃ is used as silver compound, and TlNO₃ is used as thallium compound, such a composition is desirable.

Further, when the metal compound is lithium compound, the weight of organic solvent is 10 to 50 parts by weight, and preferably 15 to 45 parts by weight, the weight of resin component is 40 to 180 parts by weight, and preferably 60 to 160 parts by weight, and the weight of additive is 180 parts by weight or less, and preferably 160 parts by weight or less, per 100 parts by weight of the metal compound. In particular, when Li₂S0₄ is used as lithium compound, such a composition is desirable.

According to the method of the present invention, the paste is first applied to a glass substrate. The shape of the paste applied is not limited and can be suitably arranged according to the properties of the optical element. For example, when a graded refractive index lens is produced, the paste may be applied to a desired portion of the substrate to form a shape usable as the lens. More specifically, when the paste is applied in circle(s), the radius of the circle(s) is usually about 5 µm to about 1 mm, and preferably about 10 µm to about 0.5 mm. When a lens array is produced, the patterning interval, circle or dot size, etc. can be suitably adjusted according to the desired lens pattern. Although the patterning interval is not particularly limited, it is usually 1 cm or less, preferably 500 µm or less, and more preferably 250 µm or less.

The method of application is not particularly limited, and known application methods can be suitably used. For example, methods such as spin coating, spray coating, dip coating, etc. can be used. When a graded refractive index microlens (microlens) is produced, the paste may be dropped onto the substrate using a syringe, a dispensing pipette, or the like, or printing techniques for forming precise circular microdots (for example, ink-jet printing) may be used.

When a diffraction grating is produced, linear patterning may be used. For linear patterning, screening (screen printing) as used in dyeing, etc. may be used. When forming a linear pattern, the line width may be suitably determined according to the desired properties of the optical element (diffraction grating, etc.) The line width for the diffraction grating is usually 500 µm or less, preferably 200 µm or less, and more preferably 100 µm or less. To form a more precise pattern, a process comprising patterning a glass substrate surface using an inorganic film according to a photolithographic method and then applying a paste containing a metal compound to the exposed portion of the glass substrate may be used.

In all the above paste application methods, the thickness of the applied paste is not particularly limited, and can be suitably determined according to the type, content, etc. of the metal compound contained in the paste. The thickness, however, is usually 2 mm or less, preferably 1.5 mm or less, and particularly preferably 1 mm or less.

After applying the paste, the resulting coating film is usually dried prior to heat treatment. The drying conditions are not particularly limited as long as the film is dried so that the solvent component is sufficiently removed and the paste is dried to a solid. Usually, the coating film can be efficiently dried by heating at a temperature of about 100°C to about 250°C for about 30 minutes to about 1.5 hours, and preferably at a temperature of about 150°C to about 200°C for about 45 minutes to about 1 hour.

Subsequently, the dried coating film is heat-treated. The heat treatment temperature is usually in the range of about 250°C to about 600°C, and preferably in the range of about 300°C to about 550°C, being set at a temperature below the softening temperature of the glass substrate. Although the heat treatment time can be suitably determined according to the temperature, it is usually about 10 minutes to about 100 hours, preferably about 30 minutes to about 50 hours, and particularly preferably about 1 to 25 hours. The heat treatment atmosphere is not limited, and the treatment may typically be performed in an oxygen-containing atmosphere, such as in air.

Heat treatment by the above-mentioned method allows desired metal ions to diffuse into the glass substrate. The diffused metal ions exist, depending on the treatment conditions, as metal ions, metal oxides, metal fine particles, etc. As a result, the portions containing such dispersed metal ions have a different refractive index region in which the refractive index differs from the rest of the glass substrate. The refractive index distribution is continuous, and usually, the refractive index at the substrate surface onto which the paste has been applied has the greatest refractive index. The greater the diffusion depth, the smaller the refractive index is. Alternatively, when the paste is applied in circle(s), the refractive index becomes continuously smaller from the center portion of the circle in the radius direction. Thus, an element structure capable of exhibiting desired optical properties can be obtained by the formation of different refractive index distributions or refractive index distribution regions from those of the substrate. The different refractive index region thus obtained by ion exchange maintains infrared absorbing ability of the glass substrate.

After heat treatment, the substrate is usually allowed to cool to room temperature, and the paste residue remaining on the substrate is washed away with water.

The gradient-index optical element having infrared absorbing ability can be produced by the above-mentioned process. For example, graded refractive index lenses can be used for laser beam focus correction, optical coupling between optical fibers, camera lenses, and like purposes. Graded refraction index lens arrays can be used for optical branching in optical communications, parallel image processing, camera lens arrays, etc. Diffraction gratings can be used for sensor elements, etc. In particular, camera lenses and camera lens arrays are optical elements that can easily benefit from infrared absorbing ability.

Needless to say, the production method of the present invention is useful for not only producing the optical elements specifically described above, but also producing an element optically capable of using a different refractive index region formed in the substrate together with the infrared absorbing ability possessed by the substrate.

### EFFECTS OF THE INVENTION

According to the method of the invention, an gradient-index optical element having infrared absorbing ability in which a different refractive index region or refractive index distribution from the rest of the substrate is formed in a desired portion of a glass substrate to utilize differences in the refractive index or refractive index distribution can be provided by simply applying a paste containing a specific metal compound to a glass substrate containing an alkali metal component, at least one member selected from the group consisting of iron, copper, cobalt and vanadium, and over 3 wt.% of iron, when contained singly among iron, copper, cobalt and vanadium, on an Fe₂O₃ basis, taking the total weight of the glass as 100 wt.%, and heating the substrate in an atmosphere such as air. This method enables the production of an optical element at low cost without requiring a complicated production process.

Moreover, since the method does not use a molten salt, strict control over a molten salt is not necessary, and the heat treatment temperature and the metal compound concentration in the paste can be controlled independently. Furthermore, unlike immersion in a molten salt, since the paste is applied to a desired portion of the substrate, it is not necessary to mask the substrate surface with a blocking film, etc.

### BRIEF DESCRIPTION OF DRAWINGS

Figure 1 is a graph of EDX line scanning results, showing the relationship between the distance in the radial direction from the center of the graded refractive index microlens obtained in Example 1 and the amount of silver diffused therein.
Figure 2 is a graph showing the infrared transmittance of the center portion (the portion containing silver diffused therein) of the microlens obtained in Example 1 and the infrared transmittance of the glass substrate portion (the portion containing no silver diffused therein). The dotted line indicates the infrared transmittance of the silver-diffused portion, and the solid line indicates the infrared transmittance of the non-silver-diffused portion.
Figure 3 is a graph showing the refractive index distribution of the depth direction (the center portion of a circle) of the glass substrate of the microlens obtained in Example 1.
Figure 4 is a schematic view showing the paste patterning in the production of the graded refractive index microlens array obtained in Example 2. 100 µm indicates the diameter of the paste-applied circle, and 200 µm indicates the patterning interval of the paste-applied circle.
Figure 5 is a graph showing the refractive index distribution in the depth direction (the center portion of the circle) of the glass substrate in a single lens of the microlens array obtained in Example 2.

### BEST MODE FOR CARRYING OUT THE INVENTION

The present invention is described in detail in reference to Examples, but is not limited thereto.

### Example 1

### Production of Graded Refractive Index Microlens

A glass containing 68 wt.% of SiO₂, 9 wt.% of CaO, 14 wt.% of Na₂O, 1 wt.% of K₂O, 1.5 wt.% of Al₂O₃, 2.4 wt.% of MgO and 3.1 wt.% of Fe₂O₃ was sized to 10 mm long x 10 mm wide x 1 mm thick for use as a glass substrate, and the surface thereof was washed.

A paste of 25 wt.% of AgN0₃, 40 wt.% of NaN0₃, 15 wt.% of acrylic resin, 15 wt.% of cellulose resin, and 5 wt.% of terpineol (the paste being prepared by mixing 20 parts by weight of organic solvent, 120 parts by weight of resin component, and 160 parts by weight of additive, per 100 parts by weight of silver compound) was applied dropwise using a syringe to one side of the glass to form a circle (diameter: 300 µm) to a thickness of 1 mm.

Subsequently, the pasted glass substrate was dried at 200°C for 1 hour, and then heat-treated in air at 300°C for 3 hours.

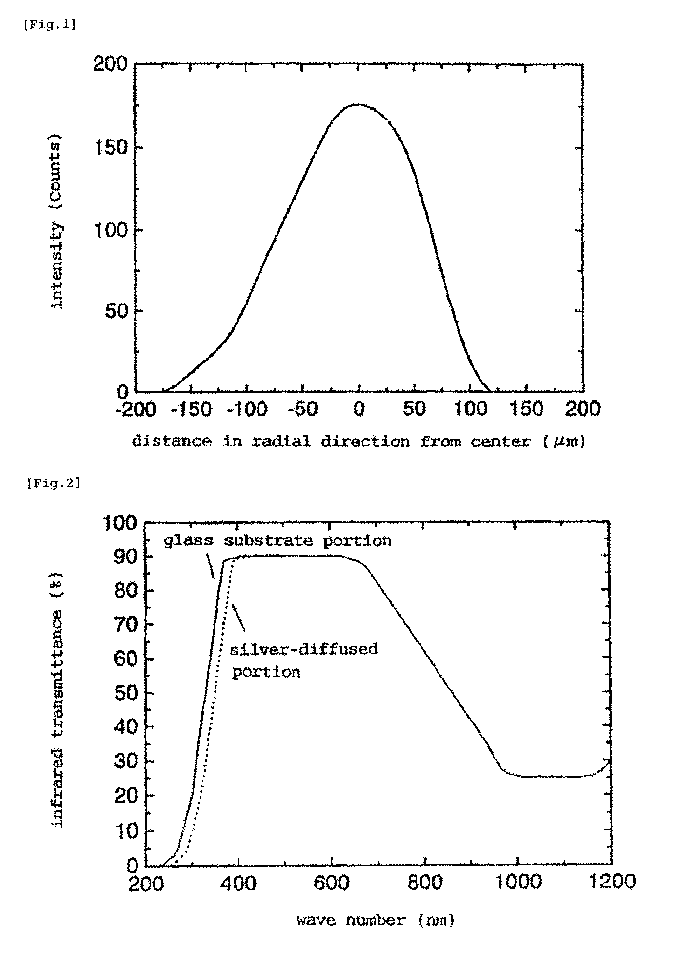

The silver distribution in the heat-treated sample was determined using an EDX (Energy Dispersive X-ray analyzer), and it was confirmed that silver was distributed in the circle. Figure 1 shows the result of the silver distribution measurement. The silver distribution is the one obtained by measuring the silver distribution on the paste-applied surface (i.e., the glass surface).

Further, the infrared transmittance at the center portion (the silver-diffused portion) of the microlens was measured, and it was revealed that the measured infrared transmittance was equal to that of the glass substrate portion (the non-silver-diffused portion). Figure 2 shows the measurement result of the infrared transmittance. In Figure 2, "substrate portion" indicates the infrared transmittance of the glass substrate portion on which silver is not diffused, and "silver-diffused portion" indicates the infrared transmittance at the center portion of the microlens. The solid line and dotted line overlap at a wavelength of about 400 nm and greater.

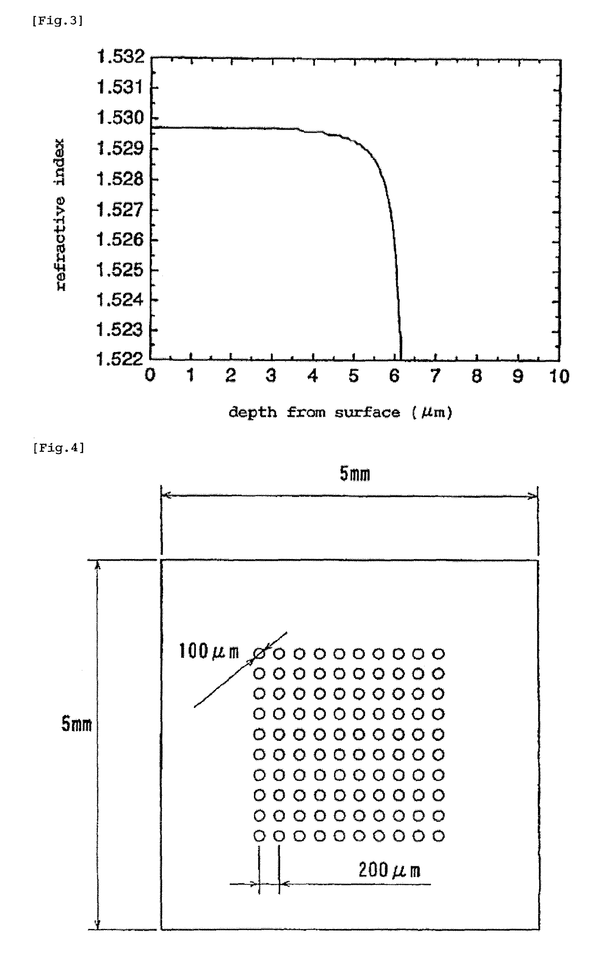

Moreover, the refractive index in the depth direction of the glass substrate was examined, and it was revealed that the maximum refractive index difference from the glass substrate was about 1 x 10⁻², and a refractive index distribution extended to a depth of about 6 µm from the surface at the center portion of the pasted circle. Figure 3 shows the refractive index distribution in the depth direction (at the center portion of the circle).

### Example 2

### Production of Graded Refractive Index Microlens Array

A glass containing 51 wt.% of P₂O₅, 18 wt.% of ZnO, 6 wt.% of Al₂O₃, 5 wt.% of Li₂O₃, 10 wt.% of Na₂O, 3 wt. % of CaO, 3 wt.% of MgO and 4 wt.% of CuO was sized to 5 mm long x 5 mm wide x 1 mm thick for use as a glass substrate, and the surface thereof was washed.

To one side of the glass substrate was applied a paste consisting of 25 wt.% of AgNO₃, 40 wt.% of NaNO₃, 15 wt.% of acrylic resin, 15 wt.% of cellulose resin and 5 wt.% terpineol (the one with 20 parts by weight of organic solvent, 120 parts by weight of resin component and 160 parts by weight of additives, per 100 parts by weight of silver compound; viscosity 10cP at room temperature) by the ink-jet method to form a circle (diameter 100 µm). The application was performed to form 10 by 10 circles (total 100 dots) with a patterning interval (distance from the center of one circle to the center of the adjacent circle) of 200 µm to a paste thickness of 1 mm. Figure 4 shows the pattern diagram of the patterning.

Subsequently, the pasted glass substrate was dried at 200°C for 1 hour, and then heat-treated in air at 300°C for 3 hours.

The silver distribution in the heat-treated sample was determined using an EDX (Energy Dispersive X-ray analyzer), and it was confirmed that silver was distributed in the circle. Further, the infrared transmittance at the center portion (the silver-diffused portion) of a single microlens was measured, and it was revealed that the measured infrared transmittance was equal to that of the glass substrate portion (the non-silver-diffused portion).

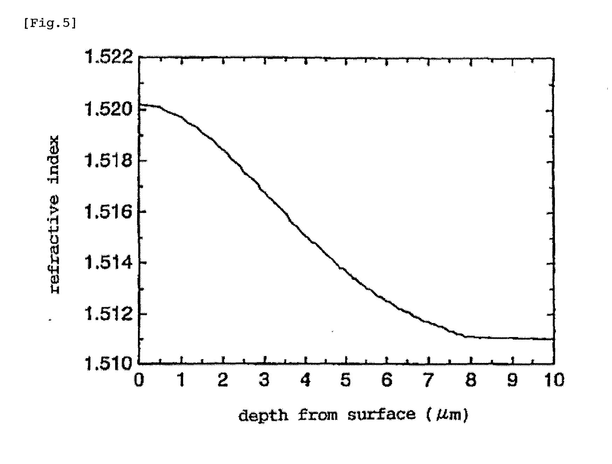

Furthermore, the refractive index in the depth direction of the glass substrate was examined, and it was revealed that the maximum refractive index difference from the glass substrate was about 1 x 10⁻², and a refractive index distribution extended to a depth of about 10 µm from the surface at the center portion of the pasted circle. Figure 5 shows the refractive index distribution in the depth direction (the center portion of a single microlens).

When a He-Ne laser (laser diameter: 2 mm) was irradiated on the obtained microlens array from the direction vertical to the glass substrate, it was found that the laser was condensed by each lens of the lens array.

## Claims

1. A method for producing a gradient-index optical element having infrared absorbing ability, the method comprising applying a paste containing an organic resin, an organic solvent, and at least one compound selected from the group consisting of lithium compounds, potassium compounds, rubidium compounds, cesium compounds, silver compounds, copper compounds, and thallium compounds onto a glass substrate containing an alkali metal component, at least one member selected from the group consisting of iron, copper, cobalt and vanadium, and over 3 wt.% of iron, when contained singly among iron, copper, cobalt and vanadium, on an Fe₂O₃ basis, taking the total weight of the glass as 100 wt.%, and heating the glass substrate at a temperature below the softening temperature of the glass substrate.

2. The production method of claim 1, wherein the glass substrate has an infrared transmittance of 80% or lower at a thickness of 1 mm.

3. The production method of claim 1, wherein the glass substrate is made of glass containing at least 2 wt.% of an alkali metal component on an oxide basis, the glass being a silicate glass, borosilicate glass, phosphate glass, or fluorophosphate glass.

4. The production method of claim 1, wherein the glass substrate is made of a phosphate glass containing each component below as an oxide composition, taking the total glass weight as 100 wt.%,
(1) 51 to 60 wt.% of P₂O₅,
(2) 17 to 33 wt.% of ZnO,
(3) 1 to 6 wt.% of Al₂O₃,
(4) 0 to 5 wt.% of Li₂O, 0 to 10 wt.% of Na₂O and 0 to 15 wt.% of K₂O, with the total weight of Li₂O, Na₂O and K₂O being 5 to 17 wt.%,
(5) 0 to 7 wt.% of MgO, and 0 to 7 wt.% of CaO, with the total weight of MgO and CaO being 1 to 12 wt.%,
(6) 0 to 5 wt.% of B₂O₃,
(7) 0 to 10 wt.% of at least one member selected from the group consisting of Y₂O₃, La₂O₃, Ta₂O₅ and WO₃, and
(8) 0.2 to 8 wt.% of CuO.

5. The production method of claim 1, wherein the glass substrate is made of a phosphate glass containing each component below as an oxide composition, taking the total glass weight as 100 wt.%,
(1) 60 to 80 wt.% of P₂O₅,
(2) 5 to 12 wt.% of ZnO,
(3) 5 to 10 wt.% of Al₂O₃,
(4) 0 to 5 wt.% of Li₂O, 0 to 8 wt.% of Na₂O, 7 to 15 wt.% of K₂O and 0 to 8 wt.% of Cs₂O, with the total weight of Li₂O, Na₂O, K₂O and Cs₂O being 7 to 15 wt.%,
(5) 0 to 10 wt.% of MgO and 0 to 10 wt.% of CaO, the total weight of MgO and CaO being 3 to 10 wt.%,
(6) 0 to 1.5 wt.% of B₂O₃ and 0 to 1.5 wt.% of SiO₂, with the total weight of B₂O₃ and SiO₂ being 0.5 to 2 wt. %, and
(7) 0.2 to 10 wt.% of CuO.

6. The production method of claim 1, wherein the glass substrate further contains 0 to 5 wt. % of at least one member selected from the group consisting of BaO, SrO, Y₂O₃, La₂O₃, ZrO₂, Ta₂O₅, Nb₂O₅, TiO₂ and Gd₂O₃

7. A gradient-index optical element having infrared absorbing ability produced by the production method of claim 1.

8. The gradient-index optical element of claim 7, wherein the element is a lens or lens array.

9. The gradient-index optical element of claim 7, wherein the element is a camera lens or camera lens array.
